# EUROPEAN PATENT SPECIFICATION

(11) **EP 2 287 986 B1**
(45) Date of publication and mention of the grant of the patent: **11.02.2015**
(21) Application number: 09168429.0
(22) Date of filing: 21.08.2009
(51) Int. Cl.: H02G 1/14, H02G 15/04, H02G 15/10

(54) **Filler assembly for cable gland**
Fülleranordnung für einen Kabelstopfen
Ensemble de remplissage pour goupille de câble

(43) Date of publication of application: 23.02.2011
(73) Proprietor: CMP Products Limited, Northumberland NE23 1WH (GB)
(72) Inventor: Proud, Samuel Liam, Newcastle upon Tyne Tyne & Wear NE5 4DF (GB)
(74) Representative: Vinsome, Rex Martin

(56) References cited:
- EP-A1- 0 434 105
- GB-A- 765 082
- GB-A- 1 335 047
- US-A1- 2002 066 518

## Description

The present invention relates to a filler assembly for filling a cable gland with curable liquid material and relates particularly, but not exclusively, to such a filler assembly for filling cable glands for use in hazardous areas.

Many cable glands for use in connecting a cable to an enclosure in hazardous areas need to be filled with a compound which provides a barrier against the effects of an explosion occurring within the enclosure to which the cable gland is attached. The barrier is typically formed from a two-part clay-filled epoxy compound. The two component parts of the compound need to be thoroughly mixed with each other prior to fitting into the gland, and the resulting putty like material needs to be packed between the individual conductors in the cable. Such an arrangement is disclosed in GB 2258350.

This known arrangement suffers from a number of drawbacks. Firstly, the cure time of the putty like material is chosen to be relatively long, in order to enable it to be manipulated into the spaces between the individual conductors before curing becomes advanced. As a result, the filled cable assembly must be left undisturbed for a significant period, usually several hours, especially if mixed at low temperatures. Also, the components of the filler material sometimes contain hazardous materials which become harmless when the filler material is mixed. Persons mixing the components of the putty like filler material may come into contact with these hazardous materials during mixing, and air can become trapped within the cable gland by the filler material which may cause the barrier formed by the filler material to fail in the event of an explosion. Filling of the cable gland is also relatively difficult, especially in the case of small cable glands.

EP 0434105 and GB 2074395 disclose arrangements according to the preamble of claim 1.

Preferred embodiments of the present invention seek to overcome one or more of the above disadvantages of the prior art.

According to an aspect of the present invention, there is provided a filler assembly for filling a cable gland, having a plurality of cores of at least one cable extending therethrough, with curable liquid material, the assembly comprising:-
(a) a dispenser apparatus for a curable liquid material, the dispenser apparatus comprising:-
   a body adapted to define at least one first chamber for accommodating a first component of a curable liquid material, and at least one second chamber for accommodating a second component of said curable liquid material and adapted to communicate with at least one said first chamber to enable mixing of said first and second components to initiate curing of said curable liquid material;
   first barrier means for temporarily preventing mixing of said first and second components;
   dispenser means adapted to communicate with at least one said second chamber and to dispense said mixed curable liquid material therefrom; and
   second barrier means for temporarily preventing passage of said curable liquid material from the or each said second chamber to said dispenser means;
   characterised in that said dispenser means is elongate and adapted to dispense said mixed curable liquid material between a plurality of cores of at least one cable; and said assembly further comprises
(b) at least one flexible barrier member having at least one respective aperture therethrough for engaging at least one core of a cable, where in the barrier member is adapted to restrict the extent of penetration of said curable liquid material along said cores.

By providing a filler assembly having a flexible barrier member an aperture therethrough for engaging at least one conductor of a cable, and a dispenser apparatus for a curable material comprising first and second chambers and barrier means for temporarily preventing mixing of the first and second components, this provides the advantage of controlling penetration of the curable liquid material into a cable gland being filled with the curable liquid material. This in turn enables a more flowable and faster curing liquid material to be used than in the prior art, as a result of which more rapid formation of a filled cable gland incorporating the material is possible. In addition, with the present invention, the curable material can be dispensed into the assembled gland, i.e. the cable gland can be filled with the conductors of the cable in a connected state, as a result of which the electrical integrity of the joint can be ensured, whereas the putty like compound of the known arrangement must be moulded around the conductors of the cable with the gland disassembled, as a result of which the cable cores can not be electrically connected.

By providing elongate dispenser means, dispensing of the curable liquid can be more carefully controlled, as a result of which less viscous and faster curing liquid material can be used than in the prior art. This therefore provides the advantage of enabling more rapid formation of a filled cable gland incorporating the material.

At least one said flexible barrier member may have a respective tapering portion.

The body may be flexible.

This provides the advantage of making the apparatus easier and less expensive to manufacture.

The first and/or second barrier means may comprise at least one releasable clamp.

The apparatus may further comprise a first component of a curable liquid material in at least one said first chamber, and a second component of said curable liquid material in at least one said second chamber.

The curable liquid material may be adapted to change colour as a result of curing thereof.

This provides the advantage of providing a visual indicator to the user when the cable gland filling process is complete.

The curable liquid material may include polyurethane.

The assembly may further comprise a cover member for covering an external screw thread of a cable gland to prevent said curable liquid material coming into contact with said screw thread.

The cover member may be adapted to prevent curable liquid material from penetrating an end face of the cable gland.

According to another aspect of the present invention, there is providing a method of filling a cable gland with curable liquid material by means of an assembly as defined above, the method comprising:-
mounting at least one flexible barrier member having at least one respective aperture therethrough to at least one core of a cable;
mixing first and second components of a curable liquid material to initiate curing of said curable liquid material; and
injecting said curable liquid material into a space between at least one said conductor and said cable gland such that said barrier member restricts movement of said curable liquid material along at least one said conductor.

A preferred embodiment of the invention will now be described, by way of example only and not in any limitative sense, with reference to the accompanying drawings in which:-
Figure 1 is a perspective view of a dispensing apparatus embodying the present invention;
Figure 2 is a partially cut away perspective view of a cable gland having a filler formed using the apparatus of Figure 1; and
Figure 3 is a cross sectional view of the filled cable gland of Figure 2 with a thread protector in place.

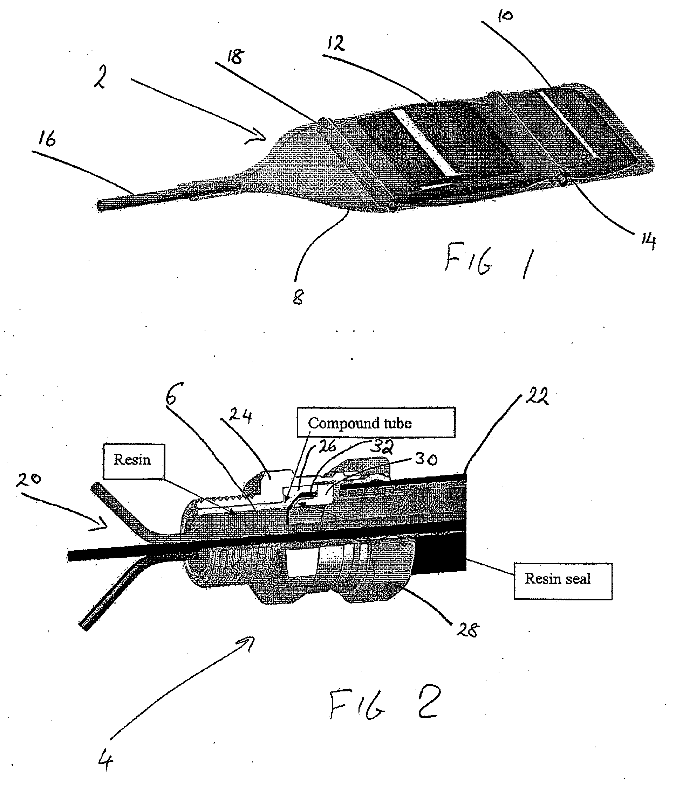

Referring to Figure 1, a dispenser apparatus 2 embodying the present invention and for use in filling a cable gland 4 (Figure 2) with curable liquid material 6 comprises a body of suitable transparent flexible plastics material defining a flexible bag 8 having a first compartment 10 for accommodating a first component of a polyurethane-based liquid curable material 6, and a second compartment 12 for accommodating a second component of the material 6. A first clamp 14 temporarily separates the first compartment 10 and second compartment 12 to thereby prevent mixing of the first and second components of the material 6. The first and second components are coloured differently (for example blue and yellow) so that thorough mixing of the first and second components produces a green liquid, thereby providing a visual indication when thorough mixing of the first and second components has occurred. Mixing of the first and second components together causes gelling of the material and initiates curing of the curable liquid material 6.

The dispenser apparatus 2 is also provided with an elongate hollow nozzle 16 extending from the second compartment 12 such that dispensing of the mixed curable liquid material can be carefully controlled. In particular, the nozzle 16 can be inserted a considerable distance into the cable gland 4 and between individual conductors 20 of the core of a cable 22 attached to the cable gland 4 (Figure 2) so that the liquid material 6 can be highly flowable and fast-curing, as a result of which the cable gland 4 can be rapidly filled and air entrapment by the liquid material 6 minimised. A second clamp 18 temporarily prevents material flowing from the second compartment 12 into the nozzle 16, so that dispensing of the material 6 can be prevented until thorough mixing together of the first and second components has occurred.

The flexible bag 8 is formed from two sheets of material welded together along all but one of their edges to form a bag having an open mouth, which is then mounted to the nozzle 16. The second clamp 18 is then mounted to the bag adjacent to the nozzle 16, and the second component of the material 6 is dispensed into the second compartment 12. The first clamp 14 is then mounted to the bag to seal the second component in the second compartment 12, and the fist component is then dispensed into the first compartment 10. The open edge of the bag is then sealed to seal the first component in the first compartment 10.

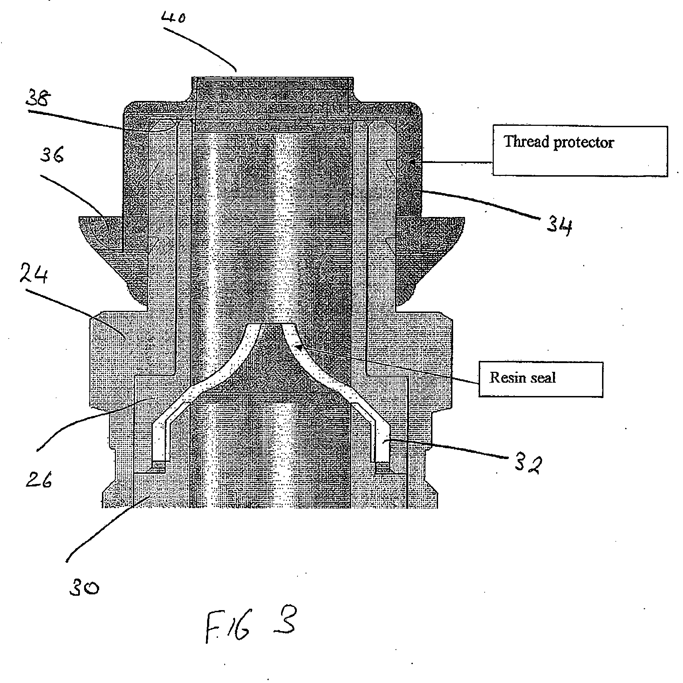

Referring to Figures 2 and 3, the cable gland 4 to be filled by means of the dispenser apparatus 2 of Figure 1 comprises a threaded outer connector 24 for threaded connection to an enclosure (not shown) and a compound tube 26 rotatably mounted within the outer connector 24. A cable connector 28 is mounted to the end of the cable 22 and is connected to the outer connector 24 by means of cooperating screw threads (not shown).

A ring 30 abuts the cable connector 28 and a flexible seal 32 is located around the inner conductors 20 of the cable 22 and compressed between the compound tube 26 and ring 30 for limiting the extent of penetration of resin material 6 into the cable gland 4 before curing of the resin material 6. The flexible seal 32 comprises a generally frusto-conical body of elastomeric material having an aperture (not shown) therethrough for engaging the central conductors 20 of the cable 22. The aperture in the seal 32 is sized such that it stretches to pass around the conductors 20 to tightly engage the conductors 20 to form a reasonably effective barrier to passage of the material 6 along the space defined between the conductors 20 and the compound tube 26.

Referring to Figure 3, a thread protector 34 formed of elastomeric material such as rubber is located over the external screw thread of the outer connector 24 of the cable gland 4 prior to filling of the cable gland with resin material 6. The thread protector 34 has a hollow rim 36 for catching excess resin material 6 which may flow out of end 40 of the cable gland 4 during the filling procedure, and an inner circular rim 38 which prevents penetration of resin material 6 into the gap between the outer connector 24 and the compound tube 26. This ensures that the compound tube 24 complete with cable connectors 20 can be removed from the outer connector 24 after curing of the resin material 6.

The process of filling the cable gland 4 of Figures 2 and 3 by means of the dispenser apparatus 2 of Figure 1 will now be described.

In order to fill the core of the cable gland 4 with resin material, the flexible seal 32 initially placed over the core conductors 20 of the cable 22 so that the seal 32 tightly grips the conductors 20. The outer connector 24 with compound tube 26 are then mounted to the ring 30 and cable connector 28 to compress the seal 32 between the ring 30 and compound tube 26. As a result, the flexible seal 32 acts as a barrier to penetration of the liquid resin 6 material into the interior of the cable gland 4.

The first clamp 14 is then removed from the dispenser apparatus 2 and the second clamp 18 left in place, to enable thorough mixing of the first and second components of the liquid resin material 6. The first and second components are coloured blue and yellow respectively, a result of which the liquid resin material 6 is bright green when it is thoroughly mixed. The second clamp 18 is then removed, and the liquid resin 6 material dispensed through the nozzle 16 into the space between the conductors 20 of the cable 22 and into the space around the conductors 20 inside the compound tube 26 of the cable gland 4, where its movement along the axis of the cable gland 4 is restricted by the flexible seal 32. The seal 32 provides a sufficient barrier to penetration of the resin material 6 to hold back the resin material until it begins to gel and support itself. At the same time, the thread protector 34 protects the external thread of the outer connector 24 from excess resin material and prevents penetration of the liquid resin material between the outer connector 24 and the compound tube 26. The resin material 6 is arranged to change colour to dark green when it is cured, so that a visual indication is provided when the curing process is completed.

It will be appreciated by persons skilled in the art that the above embodiment has been described by way of example only, and not in any limitative sense, and that various alterations and modifications are possible without departure from the scope of the invention as defined by the appended claims.

## Claims

1. A filler assembly for filling a cable gland, having a plurality of cores of at least one cable extending therethrough, with curable liquid material, the assembly comprising:-
(a) a dispenser apparatus (2) for a curable liquid material, the dispenser apparatus comprising:-
a body adapted (8) to define at least one first chamber (10) for accommodating a first component of a curable liquid material, and at least one second chamber (12) for accommodating a second component of said curable liquid material and adapted to communicate with at least one said first chamber to enable mixing of said first and second components to initiate curing of said curable liquid material;
first barrier means (14) for temporarily preventing mixing of said first and second components;
dispenser means (16) adapted to communicate with at least one said second chamber and to dispense said mixed curable liquid material therefrom; and
second barrier means (18) for temporarily preventing passage of said curable liquid material from the or each said second chamber to said dispenser means;
**characterised in that** said dispenser means is elongate and adapted to dispense said mixed curable liquid material between a plurality of cores of at least one cable;
and said assembly further comprises
(b) at least one flexible barrier member (32) having at least one respective aperture therethrough for engaging at least one core of a cable, wherein the barrier member is adapted to restrict the extent of penetration of said curable liquid material along said cores.

2. An assembly according to claim 1, wherein at least one said flexible barrier member has a respective tapering portion.

3. An assembly according to claim 1 or 2, wherein the body is flexible.

4. An assembly according to any one of the preceding claims, wherein the first and/or second barrier means comprises at least one releasable clamp.

5. An assembly according to any one of the preceding claims, wherein the apparatus further comprises a first component of a curable liquid material in at least one said first chamber, and a second component of said curable liquid material in at least one said second chamber.

6. An assembly according to claim 5, wherein the curable liquid material is adapted to change colour as a result of curing thereof.

7. An assembly according to claim 5 or 6, wherein the curable liquid material includes polyurethane.

8. An assembly according to any one of the preceding claims, further comprising a cover member (34) for covering an external screw thread of a cable gland to prevent said curable liquid material coming into contact with said screw thread.

9. An assembly according to claim 8, wherein the cover member is adapted to prevent curable liquid material from penetrating an end face of the cable gland.

10. A method of filling a cable gland with curable liquid material by means of an assembly according to any one of the preceding claims, the method comprising:-
mounting at least one flexible barrier member having at least one respective aperture therethrough to at least one core of a cable;
mixing first and second components of a curable liquid material to initiate curing of said curable liquid material; and
injecting said curable liquid material into a space between at least one said conductor and said cable gland such that said barrier member restricts movement of said curable liquid material along at least one said conductor.

## Patentansprüche

1. Fülleranordnung zum Füllen einer Kabelverschraubung, durch die mehrere Adern von wenigstens einem Kabel verlaufen, mit aushärtbarem flüssigem Material, wobei die Anordnung Folgendes umfasst:
(a) eine Ausgabevorrichtung (2) für ein aushärtbares flüssiges Material, wobei die Ausgabevorrichtung Folgendes umfasst:
einen Körper (8), der zum Definieren wenigstens einer ersten Kammer (10) zum Aufnehmen einer ersten Komponente eines aushärtbaren flüssigen Materials und wenigstens einer zweiten Kammer (12) zum Aufnehmen einer zweiten Komponente des genannten aushärtbaren flüssigen Materials ausgeführt ist und zur Kommunikation mit wenigstens einer genannten ersten Kammer ausgeführt ist, um das Vermischen der genannten ersten und zweiten Komponente zu ermöglichen, um das Aushärten des genannten aushärtbaren flüssigen Materials einzuleiten,
eine erste Sperreinrichtung (14) zum zeitweiligen Verhindern des Vermischens der genannten ersten und zweiten Komponente,
ein Ausgabemittel (16), das zur Kommunikation mit wenigstens einer genannten zweiten Kammer und zum Ausgeben des genannten gemischten aushärtbaren flüssigen Materials aus ihr ausgeführt ist, und
eine zweite Sperreinrichtung (18) zum zeitweiligen Verhindern des Hindurchströmens des genannten aushärtbaren flüssigen Materials aus der oder jeder genannten zweiten Kammer zu dem genannten Ausgabemittel,
**dadurch gekennzeichnet, dass** das genannte Ausgabemittel länglich ist und zum Ausgeben des genannten gemischten aushärtbaren flüssigen Materials zwischen mehreren Adern von wenigstens einem Kabel ausgeführt ist, und
wobei die genannte Anordnung ferner Folgendes aufweist:
(b) wenigstens ein biegsames Sperrelement (32) mit wenigstens einer jeweiligen Öffnung durch es hindurch für den Eingriff mit wenigstens einer Ader eines Kabels, wobei das Sperrelement zum Beschränken des Eindringungsmaßes des genannten aushärtbaren flüssigen Materials an den genannten Adern entlang ausgeführt ist.

2. Anordnung nach Anspruch 1, wobei das wenigstens eine genannte biegsame Sperrelement einen jeweiligen konischen Teil hat.

3. Anordnung nach Anspruch 1 oder 2, wobei der Körper biegsam ist.

4. Anordnung nach einem der vorhergehenden Ansprüche, wobei die erste und/oder zweite Sperreinrichtung wenigstens eine lösbare Klemme umfasst.

5. Anordnung nach einem der vorhergehenden Ansprüche, wobei die Vorrichtung ferner eine erste Komponente eines aushärtbaren flüssigen Materials in wenigstens einer genannten ersten Kammer und eine zweite Komponente des genannten aushärtbaren flüssigen Materials in wenigstens einer genannten zweiten Kammer aufweist.

6. Anordnung nach Anspruch 5, wobei das aushärtbare flüssige Material so ausgeführt ist, dass es infolge seiner Aushärtung seine Farbe wechselt.

7. Anordnung nach Anspruch 5 oder 6, wobei das aushärtbare flüssige Material Polyurethan beinhaltet.

8. Anordnung nach einem der vorhergehenden Ansprüche, die ferner ein Abdeckelement (34) zum Bedecken eines Außenschraubgewindes einer Kabelverschraubung aufweist, um zu verhindern, dass das genannte aushärtbare flüssige Material mit dem genannten Schraubgewinde in Kontakt kommt.

9. Anordnung nach Anspruch 8, wobei das Abdeckelement ausgeführt ist, um aushärtbares flüssiges Material am Eindringen in eine Endseite der Kabelverschraubung zu hindern.

10. Verfahren zum Füllen einer Kabelverschraubung mit aushärtbarem flüssigem Material mithilfe einer Anordnung nach einem der vorhergehenden Ansprüche, wobei das Verfahren Folgendes umfasst:
Anbringen wenigstens eines biegsamen Sperrelements, das wenigstens eine jeweilige Öffnung durch es hindurch hat, an wenigstens einer Ader eines Kabels,
Vermischen der ersten und zweiten Komponente eines aushärtbaren flüssigen Materials zum Einleiten des Aushärtens des genannten aushärtbaren flüssigen Materials und
Einspritzen des genannten aushärtbaren flüssigen Materials in einen Raum zwischen wenigstens einem genannten Leiter und der genannten Kabelverschraubung, so dass das genannte Sperrelement die Bewegung des genannten aushärtbaren flüssigen Materials an wenigstens einem genannten Leiter entlang beschränkt.

## Revendications

1. Ensemble de remplissage destiné à remplir un presse-étoupe, contenant plusieurs brins d'au moins un câble se prolongeant en le traversant, avec un matériau liquide durcissable, l'ensemble comportant :
(a) un dispositif distributeur (2) pour un matériau liquide durcissable, le dispositif distributeur comportant :
un corps conçu (8) pour définir au moins une première chambre (10) destinée à recevoir un premier composant d'un matériau liquide durcissable, et au moins une deuxième chmabre (12) destinée à recevoir un deuxième composant dudit matériau liquide durcissable et conçu pour communiquer avec au moins une dite première chambre pour permettre le mélange desdits premier et deuxième composants afin de déclencher le durcissement dudit matériau liquide durcissable ;
un premier moyen formant barrière (14) permettant d'éviter temporairement de mélanger lesdits premier et deuxième composants ;
un moyen formant distributeur (16) conçu pour communiquer au moins avec une dite deuxième chambre, et pour distribuer ledit matériau liquide durcissable mélangé; et
un deuxième moyen formant barrière (18) permettant d'éviter temporairement le passage dudit matériau liquide durcissable depuis la ou lesdites deuxièmes chambres vers ledit moyen formant distributeur ;
**caractérisé en ce que** ledit moyen formant distributeur est allongé et conçu pour distribuer ledit matériau liquide durcissable mélangé entre plusieurs brins d'au moins un câble ;
et ledit ensemble comporte en outre
(b) au moins un organe formant barrière flexible (32) possédant au moins une ouverture respective le traversant pour engager au moins un brin d'un câble, dans lequel l'organe formant barrière est conçu pour restreindre le degré de pénétration dudit matériau liquide durcissable le long desdits brins.

2. Ensemble selon la revendication 1, dans lequel au moins un dit organe formant barrière flexible possède une partie filetée respective.

3. Ensemble selon la revendication 1 ou 2, dans lequel le corps est flexible.

4. Ensemble selon l'une quelconque des revendications précédentes, dans lequel le premier et/ou le deuxième moyen formant barrière comporte au moins une bride de fixation démontable.

5. Ensemble selon l'une quelconque des revendications précédentes, dans lequel l'appareil comporte un premier composant d'un matériau liquide durcissable dans au moins une dite première chambre, et un deuxième composant dudit matériau liquide durcissable dans au moins une dite deuxième chambre.

6. Ensemble selon la revendication 5, dans lequel le matériau liquide durcissable est conçu pour changer de couleur suite à son durcissement.

7. Ensemble selon la revendication 5 ou 6, dans lequel le matériau liquide durcissable inclut le polyuréthane.

8. Ensemble selon l'une quelconque des revendications précédentes, comportant en outre un organe formant couvercle (34) destiné à couvrir un filetage de vis extérieure d'un presse-étoupe pour éviter que le matériau liquide durcissable n'entre en contact avec ledit filetage de vis.

9. Ensemble selon la revendication 8, dans lequel l'organe formant couvercle est conçu pour éviter que le matériau liquide durcissable ne pénètre par une face d'extrémité du presse-étoupe.

10. Procédé de remplissage d'un presse-étoupe avec un matériau liquide durcissable au moyen d'un ensemble selon l'une quelconque des revendications précédentes, le procédé comportant :
le montage d'au moins un organe formant barrière flexible possédant au moins une ouverture respective le traversant vers au moins un brin d'un câble ;
le mélange des premier et deuxième composants d'un matériau liquide durcissable pour déclencher le durcissement dudit matériau liquide durcissable ; et l'injection dudit matériau liquide durcissable dans un espace entre au moins un dit conducteur et ledit presse- étoupe de sorte que ledit organe formant barrière restreigne le mouvement dudit matériau liquide durcisseur le long au moins d'un dit conducteur.
